# EUROPEAN PATENT SPECIFICATION

(11) **EP 1 313 674 B1**
(45) Date of publication and mention of the grant of the patent: **16.06.2004**
(21) Application number: 01956706.4
(22) Date of filing: 17.08.2001
(51) Int. Cl.: C03C 3/078, C03C 3/087, C03B 18/02

(54) **SODA-LIME-SILICA GLASS COMPOSITIONS**
KALK-NATRON-SILIKAT GLASZUSAMMENSETZUNGEN
COMPOSITIONS DE VERRE SILICE-CHAUX-SOUDE

(30) Priority: 19.08.2000 GB 0020471
(43) Date of publication of application: 28.05.2003
(73) Proprietor: PILKINGTON PLC, St. Helens, Merseyside WA10 3TT (GB)
(72) Inventor: BUCKETT, John, Knutsford Cheshire WA16 6TT (GB); MARSH, Jonathan, Samuel, Merseyside WA12 8BD (GB); TORR, Ashley, Carl, Ormskirk Lancashire L39 6RY (GB)
(74) Representative: Halliwell, Anthony Charles
(86) International application number: PCT/GB2001/003683
(87) International publication number: WO 2002/016277

(56) References cited:
- EP-A- 0 463 607
- WO-A-99/01391
- DE-A- 4 313 215
- US-A- 4 701 425
- US-A- 5 352 640
- DATABASE WPI Section Ch, Week 199947 Derwent Publications Ltd., London, GB; Class L01, AN 1999-554995 XP002183209 & JP 11 240735 A (ASAHI GLASS CO LTD), 7 September 1999 (1999-09-07)
- DATABASE WPI Section Ch, Week 199506 Derwent Publications Ltd., London, GB; Class L01, AN 1995-042297 XP002183210 & RU 2 013 392 C (TSEPOCHKINA YU A), 30 May 1994 (1994-05-30)

## Description

The present invention relates to soda lime glass compositions which are suitable for forming by the float process. More particularly, the present invention relates to such compositions in which the proportion of Na₂O is reduced.

The float process is well known in the glass industry, and is characterised by forming a ribbon of glass on a bath of molten metal, normally tin; the glass in effect "floats" on the tin because of the difference in densities. Since its invention in the late 1950's, the float process has become the standard global process for the so-called "flat glass" industry, i.e. the industry which supplies glass in sheet form for windows and other glazings in buildings and vehicles, and other applications requiring flat glass. Frequently, however, the glass as supplied is in fact curved, having been bent in a secondary processing operation.

Float glass (i.e. glass made by the float process, which is normally a soda-lime-silica glass) is melted from a mixture of raw materials which is referred to as the "batch". Commonly used raw materials include sand, soda ash (sodium carbonate), limestone, dolomite and saltcake (sodium sulphate).

When the float process was invented, the composition of float glass was developed from that used for polished plate glass by increasing magnesia (MgO) and reducing lime (CaO) to reduce the liquidus temperature. The float process was licensed to all the major glass manufacturers, who adopted this composition subject to slight changes due to natural variations in the composition of raw materials available around the world. Analyses of various commercially produced flat glasses from around the world still show a great similarity, and this reflects the prevalent belief that any major departure from the established composition would result in either inferior glass properties or unacceptable manufacturing difficulties.

The established composition has been accepted as the best compromise between ease of melting, low liquidus temperature, suitable viscosity characteristics for refining and forming, and minimum batch cost.

However, to remain competitive, glassmakers are continuously seeking cost reductions, and the cost of raw materials is, of course, a significant element in the cost of production. Soda ash is by far the most expensive of the principal raw materials used for soda lime glass, generally costing three to five times as much per tonne as the next most expensive raw material; which is dolomite or limestone, depending on location. Indeed, the cost of soda ash may constitute from 60 to 80% of the total cost of the batch.

It has been suggested in WO 99/01391 that cost savings could be made by reducing the Na₂O content of float glass, so that less soda ash is required in the batch. As disclosed in the first full paragraph on page 4 of WO 99/01391, the proportion of alkaline earth oxides, especially CaO, may also be reduced. Both the reductions in soda and lime are compensated by an increase in silica content, which leads to a more viscous glass for which the primary devitrification phase is a silica mineral, e.g. tridymite.

The increased silica content proposed by this approach to soda reduction involves certain disadvantages. Silica is the most refractory constituent in the batch, and an increase in silica (especially when accompanied by a decrease in the principal flux, namely soda) is highly likely to result in worse melt rates and an increase in undissolved silica inclusions. Furthermore, given that the primary devitrification phase is also a silica mineral, any devitrification (resulting fram the glass temperature falling below the liquidus temperature) will be much slower to dissolve, compared to the standard glass composition, when the temperature once again exceeds the liquidus temperature. It can be seen from the table on page 6 of WO 99/01391 that the proposed composition is more viscous than the previous composition to the extent that the proposed composition needs to be heated to a temperature 34°-40°C higher to attain the same viscosity as the previous composition. If this viscosity increase exists throughout the temperature range, operations such as annealing and toughening will be affected.

It would be desirable to provide a soda lime glass composition of reduced cost, suitable for forming by the float process, in which the above disadvantages are alleviated. It has now been realised that it is possible to provide such a composition, by reducing the soda content without increasing the silica content.

According to the present invention, there is provided a soda lime silica glass suitable for forming by the float process, having a composition comprising (in percentage by weight);

| | |
|---|---|
| SiO₂ | 68 - 75% |
| Al₂O₃ | 0-4% |
| Na₂O | 6 - 12.4% |
| K₂O | 0 - 3% |
| CaO | 10.2-17% |
| MgO | 0 - 5.5% |
| Fe₂O₃ | 0 - 2% |
| SO₃ | 0 - 0.5% |

The essence of the present invention is to replace soda with lime (CaO) instead of silica. In this way it is possible to provide a low cost glass composition which is close to being iso-viscous with a standard float composition, has the mineral wollastonite (which is easy to melt) as its primary devitrification phase, and which generally has physical and optical properties comparable with those of standard float glass (further details are given below).

Preferably, the glass contains 0.8 - 5.5 percent by weight of MgO. A minimum level of MgO is desirable because magnesia-free soda lime glasses tend to have significantly higher liquidus temperatures. However, the relationship between the price of dolomite (the usual source of MgO; it also contains CaO) and the price of limestone (a source of CaO only) varies around the world, and to minimise the cost of the batch, it is desirable to adjust the glass composition to the locally prevailing prices in the place in which the glass is being melted.

A preferred range of soda lime glasses within the scope of the present invention contain 9 - 12.2 wt % Na₂O, 10.6 - 15 wt % CaO and 1.0 - 5.0 wt % MgO. These glasses represent a good compromise between cost reduction on the one hand, and melting, refining and forming characteristics and also physical properties in the final glass on the other hand.

It is well known that the alkali metal oxides (e.g. Na₂O), being monovalent and highly ionic in nature, have the effect of breaking up the silicon-oxygen network in a silicate glass by reducing the number of bridging oxygen atoms. Reducing the soda content of a silicate glass can therefore be expected to result in an increase in viscosity and a reduction in the coefficient of thermal expansion. Surprisingly, it has been found that by careful control of the other oxides, especially silica, calcic (lime) and magnesia, it is possible to provide glasses which contain reduced levels of soda, and yet have viscosities and thermal expansion coefficients which are very close to those of standard float glass.

Advantageously, therefore, the glass has a viscosity curve such that T log 4 (i.e. the temperature at which log₁₀ viscosity expressed in poise = 4) is between 1014°C and 1050°C, and/or T log 3.5 is between 1100°C and 1140°C, and/or T log 2.5 is between 1290°C and 1350°C, and/or T log 2 is between 1430°C and 1500°C. Suitably, the coefficient of thermal expansion may be in the range 86 - 92 x 10⁻⁷ /°C (when measured over the range 50°C - 350°C). The refractive index N_{D} is preferably in the range 1.50 - 1.54. It will be appreciated that it is highly advantageous for low cost soda lime glass according to the invention to possess similar physical properties to conventional soda lime glass, because this allows glass according to the invention to be substituted for conventional glass in the various uses and applications to which such glass is put, without the need for substantial compensatory changes.

For example, sheets of float glass are commonly subjected to further, so-called "downstream", or secondary, processing. This may entail any or all of processes such as printing, bending, toughening or laminating. These processes are influenced by physical properties such as viscosity, thermal expansion coefficient, and refractive index, and hence it is desirable to keep variations in these properties to a minimum.

It might be expected that glasses with similar thermal expansion coefficients and viscosities would show similar behaviour on thermal toughening, i.e. the same heat treatment would produce similar stresses in the glass, and these would result in similar behaviour on fracture in terms of particle size, shape and count. Surprisingly, it has been found that glasses according to the invention are in fact easier to toughen than conventional glasses. Moreover, their fracture behaviour is also improved (more details are given below). Glasses according to the invention preferably have a fracture toughness of less than 0.72 MPa m^{½}, and more preferably less than 0.70 MPa m^{½}. This improvement in toughenability is important for both the architectural and automotive markets, and especially for those small processors whose toughening equipment is only just able to meet modem safety standards. Toughening equipment (e.g. furnaces, quench units and fans) has a high capital cost, and the cost of replacement would be prohibitive for many small producers.

According to another aspect of the invention, there is provided a thermally toughened sheet of glass having a composition as described herein.

Preferred glasses according to the invention have compositions containing the following constituents in the percentages by weight indicated below:

| | |
|---|---|
| SiO₂ | 70-73.5% |
| Al₂O₃ | 0-3% |
| Na₂O | 9-12.2% |
| K₂O | 0-2% |
| CaO | 10.6-15% |
| MgO | 1.0 - 5.0% |
| Fe₂O₃ | 0-2% |
| SO₃ | 0 - 0.5% |

For glasses according to the invention, the sum of the weight percentages of Na₂O, K₂O, CaO and MgO is preferably between 23 and 30 wt %, more preferably between 25 and 27 wt %.

It is also preferable that the weight percentages of SiO₂, Al₂O₃, Na₂O, K₂O, CaO, MgO, Fe₂O₃ and SO₃ should total at least 98%, more preferably 99%, and most preferably 99.5%. Of course, in many cases, they will total 100%, as in the Examples below.

Glasses according to the invention may have a liquidus temperature in the range 1050°C - 1200°C. Preferably the liquidus temperature is in the range 1070°- 1150°C. These values are substantially higher than for a conventional soda lime float glass, which has a liquidus temperature around 1000°C - 1030°C according to the particular composition used by each manufacturer. If molten glass resides in any part of the glassmaking furnace, conditioner or canal for a prolonged period below the liquidus temperature, this will result in devitrification which in turn is most likely to lead to rejection of the glass produced. The canal is particularly critical, since the glass flowing along the canal advances directly into the float bath and becomes part of the ribbon formed there. While in many respects the present invention is advantageous in not requiring a change to conventional operation, the forming process is an exception. To alleviate devitrification, it is desirable to operate the canal at substantially higher temperatures than normal, in fact at temperatures which are most unusual for large scale float glass manufacture. This is why it was previously thought that glass compositions with substantially lower soda and higher lime than normal were not compatible with the float process; it was simply not expected that they could be formed into a ribbon satisfactorily.

According to a further aspect of the invention, there is provided a method of forming glass as a ribbon on a float bath supplied by a canal operating at a temperature in the range 1100° - 1250°, preferably in the range 1150° - 1200°. Preferably, the glass has a viscosity (expressed as log₁₀ viscosity in poise) in the range 3.5 to 3.0 at the canal operating temperature.

The invention has been primarily developed for clear glass, but is also applicable to tinted (body-coloured), since a glass according to the invention may be used as the base composition to which colourants are added. Such colourants are normally added in relatively small proportions, and so do not substantially change the basic composition in terms of weight percentages of oxides. Commonly used colourants include selenium, cobalt oxide, nickel oxide, chromium oxide, cerium oxide, and, of course, the level of Fe₂O₃ may be increased. There may also be present small proportions of many other oxides which are known to be included in glass.

For the purposes of this specification, "clear" glass is considered to be any glass which has a light transmission of at least 85% measured on a sheet 4mm thick with Illuminant C, an internationally agreed standard illuminant.

The invention is illustrated but not limited by the following examples, except for Example 1 which is a standard known commercially produced float glass composition provided for comparison purposes. References in this specification to a "standard" soda lime float glass composition should be taken as references to this composition except where the context indicates otherwise.

Examples 1 to 12 are shown in tabular form in Table 1. It should be noted that, in accordance with the usual convention, total iron is expressed as Fe₂O₃. The temperatures (in °C) for a number of characteristic viscosities (expressed as log₁₀ viscosity in poise) are stated, and the liquidus temperature is also stated in °C. Refractive index N_{D} is for the mean D-line of sodium, λ = 589.3 nm. Thermal expansion is expressed in abbreviated form to save space; e.g. for Example 1, 91.4 should be read as 91.4 x 10⁻⁷/°C (measured over the temperature range 50°C - 350°C).

The glasses for which the compositions are listed in Table 1 were all melted according to a standard laboratory procedure. Relative weights of raw materials in the batch were calculated, and sufficient batch to produce 1 kg glass was made up, all in conventional manner. The batch was placed in a platinum crucible and pre-melted in an electric laboratory furnace for 1 hour at 1380°C. The resulting glass was crizzled by pouring it into a large receptacle of cold water. The crizzled glass was re-melted for 1½ hours at 1480°C, followed by ½ hour at 1430°C. The glass was annealed overnight at T log 13.4, e.g. 555° for the standard float composition (Example 1). The resulting samples of the various glasses were used for the determination of physical properties.

In a separate series of experiments, comparisons of melting performance were undertaken by assessing the number of undissolved particles remaining after set lengths of time (e.g. 90, 100, 110 minutes, etc) at 1480°C. It was found that the melting performance of all the compositions given in Table 1 was sufficiently good to allow them to be melted in a standard production float furnace; however, the melting performances of Examples 8 and 9 were noticeably worse than the others. Example 7 displayed a melting rate not significantly worse than that of standard float (Example 1), and this composition is preferred for this reason, together with its relatively low liquidus temperature.

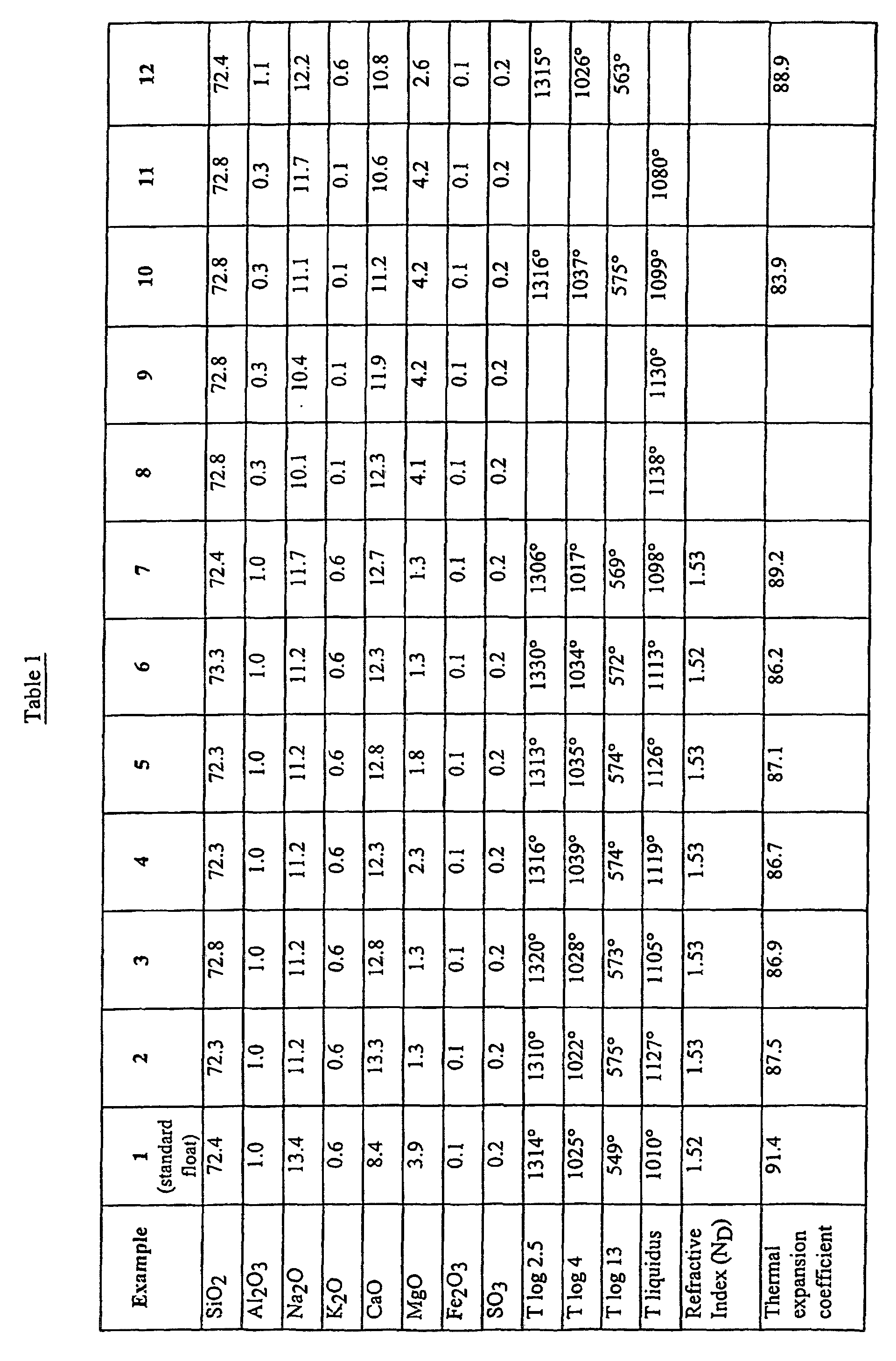

It has already been mentioned that raw material prices vary around the world, and so it is desirable to adjust the glass composition to suit the locally prevailing prices in the place where the glass is being melted. A particular instance of this is illustrated by comparing Europe and USA. In most European countries, dolomite is considerably more expensive than limestone, generally costing around 1½ times as much. However, in USA, the two materials may be of similar price, or in some localities, dolomite may be cheaper. The most cost-effective glass composition for USA will therefore be different from that for Europe, especially in terms of CaO and MgO content. The compositions of Examples 8 to 11 were formulated on the basis of US raw material prices. As explained above, Examples 8 and 9 displayed inferior melting performances, and so Examples 10 and 11 are preferred, with Example 10 yielding the larger cost saving.

Examples 2 to 7 and 12 were formulated on the basis of European raw material prices, and illustrate how the physical and optical properties of the glass vary as various constituent oxides are adjusted. Especially suitable compositional ranges for glasses adapted to European and US raw material prices are given in Table 2, expressed in weight percent:

**Table 2**

| | Europe | USA |
|---|---|---|
| SiO₂ | 71 - 73% | 71 - 73.5% |
| Al₂O₃ | 0-2% | 0 - 2% |
| Na₂O | 11-12.2% | 10 - 12.2% |
| K₂O | 0-2% | 0-2% |
| CaO | 12 - 14% | 10.6 - 12.6% |
| MgO | 1.1 - 2.0% | 3.5 - 5.0% |
| Fe₂O₃ | 0 - 2% | 0 - 2% |
| SO₃ | 0 - 0.5% | 0 - 0.5% |

As has already been mentioned, it is desirable to form glass according to the invention at a temperature above the liquidus temperature. This may entail operating the canal of a conventional float line at a temperature in the range 1100° - 1250°C, preferably 1150° - 1200°C. In float glassmaking practice, "canal operating temperature" is normally used as the means of controlling the temperature of the molten glass as it is delivered to the float bath. Canal temperature is usually measured by means of a suitable optical pyrometer mounted on or near the canal centreline at a position about hallway along its length. It should be noted that the temperature measured will include radiation contributions from varying depths of glass according to whether the glass is clear or tinted, and in the latter case, what the tint is. There will always be a temperature differential in the molten glass between the surface and the base of the canal, and for a dark iron-containing tint, for example, the differential may amount to many tens of °C. With such tints, a pyrometer will only indicate the temperature of glass very close to the surface, so due allowance needs to be made to ensure that glass at the base of the canal does not fall below the liquidus temperature.

It will be apparent that if the glass is hotter on entry into the float bath, it will be less viscous than in standard float operation. Moreover, some variants of the compositions according to the invention may be inherently somewhat less viscous at a given forming temperature than the standard composition. Fundamentally, the reduced viscosity means that the equilibrium thickness of ribbon produced (i.e. with no intervention to thin or thicken the ribbon) is less than for the standard thickness. The glass has an increased tendency to spread after being poured onto the molten tin, and intervention may be desirable to avoid it reaching the sidewalls.

For thinner glass, it is desirable to increase the speed and/or angle of the upstream top rolls. The angles of the top rolls may approach values at which there is a risk of introducing distortion, and in this situation it is desirable to provide additional top rolls to reduce the angle at which they operate.

In the case of thicker glass, the glass tends to spread at the end of the fenders due to the higher temperatures; it is therefore desirable to increase the number of pairs of fenders to control this. The use of hot end bath coolers also helps to control the spread on both thick and thin glass, and avoids the risk of exceeding the maximum safe top roll operating temperature on thin glass.

With glass of thin and medium thicknesses, there may be a tendency for the ribbon to neck in as it passes through the later top rolls; in this situation, the angle of the later top rolls should also be increased.

The coefficient of thermal expansion of a glass influences its toughening properties, because a greater expansion for a given temperature differential will yield a greater stress differential. Toughening (also known as tempering) of glass relies on the production of a stress differential between the surface and the centre of the thickness of a sheet of glass, so that the surface is in compression and the core is in tension. Consequently, during the formulation of a low cost glass composition, care was taken to ensure that the thermal expansion coefficient did not reduce significantly.

Experiments to determine toughenability were undertaken with the preferred European composition (Example 7) in comparison with standard float glass (Example 1).

Glass samples 4 mm thick were toughened on each of two toughening furnaces used in production. Furnace 2 employed a higher quench pressure than Furnace 1. Centre tension was measured on the samples, and they were then fractured in a standard manner, and the number of particles produced in a 50 mm by 50 mm square was counted. Please see Table 3 for the results.

It had been noted that, at toughening temperatures (around 650°C - 700°C) the new composition was slightly more viscous than the standard float composition. This was expected to result in slightly worse toughening properties, because of the reduced molecular movement; effectively, the glass is equivalent to the standard float composition at a slightly lower temperature.

Surprisingly, the experimental results showed that the new (Example 7) composition is easier to toughen than the standard float glass composition, i.e. a better result was recorded in the fracture tests. The fracture counts are in fact well over 20% higher. It is surmised that glass of the Example 7 composition has a significantly different glass structure from glass of standard float composition. The property known as "fracture toughness" reflects the resistance of a material to crack propagation. Measurements of fracture toughness on glass of the Example 7 compositions gave a value of 0.68 MPa m^{½}, thereby revealing that the glass has a noticeably lower fracture toughness than the standard float glass composition (fracture toughness = 0.71 MPa m^{½}).

**Table 3**

| Sample | Description | Furnace | Average Centre Tension (MPa) | Average Fracture Count |
|---|---|---|---|---|
| 1 | Example 1 * | 1 | 51.5 | 112 |
| 2 | Example 1 † | 1 | 51.7 | 106 |
| 3 | Example 7 | 1 | 53.3 | 135 |
| 4 | Example 1 * | 2 | 55.8 | 168 |
| 5 | Example 7 | 2 | 61.8 | 215 |

| | | | | |
|---|---|---|---|---|
| * produced on commercial float line | | | | |
| † produced in laboratory | | | | |

## Claims

1. A soda lime silica glass suitable for forming by the float process, having a composition comprising (in percentage by weight):
| | |
|---|---|
| SiO₂ | 68 - 75 % |
| Al₂O₃ | 0 - 4 % |
| Na₂O | 6 - 12.4 % |
| K₂O | 0 - 3 % |
| CaO | 10.2 - 17 % |
| MgO | 0 - 5.5 % |
| Fe₂O₃ | 0 - 2 % |
| SO₃ | 0 - 0.5 % |

2. A glass as claimed in claim 1, containing 0.8 - 5.5 wt % MgO.

3. A glass as claimed in claim 1 or claim 2, containing 9 - 12.2 wt % Na₂O, 10.6 -15 wt % CaO and 1.0 - 5.0 wt % MgO.

4. A glass as claimed in any preceding claim, wherein T log 4 (i.e. the temperature at which log₁₀ viscosity expressed in poise = 4) is between 1010° C and 1450° C.

5. A glass as claimed in any preceding claim, wherein T log 3.5 is between 1100° C and 1140° C.

6. A glass as claimed in any preceding claim, wherein T log 2.5 is between 1290° C and 1350° C.

7. A glass as claimed in any preceding claim, having a coefficient of thermal expansion in the range 86 - 92 x 10⁻⁷ /°C (50° - 350° C).

8. A glass as claimed in any preceding claim, having a refractive index N_{D} in the range 1.50-1.54.

9. A glass as claimed in any preceding claim, having a fracture toughness of less than 0.72 MPa m^{½}, preferably less than 0.70 MPa m^{½}.

10. A glass as claimed in any preceding claim, having a liquidus temperature in the range 1050° -1200° C, preferably 1070° -1150° C.

11. A glass as claimed in any preceding claim, comprising (in percentage by weight):
| | |
|---|---|
| SiO₂ | 70 - 73.5 % |
| Al₂O₃ | 0-3% |
| Na₂O | 9 - 12.2 % |
| K₂O | 0-2% |
| CaO | 10.6 - 15 % |
| MgO | 1.0 - 5.0 % |
| Fe₂O₃ | 0 - 2 % |
| SO₃ | 0 - 0.5 % |

12. A glass as claimed in claim 11, comprising (in percentage by weight):
| | |
|---|---|
| SiO₂ | 71 - 73 % |
| Al₂O₃ | 0 - 2 % |
| Na₂O | 11 - 12.2 % |
| K₂O | 0 - 2 % |
| CaO | 12 - 14 % |
| MgO | 1.1 - 2.0 % |
| Fe₂O₃ | 0 - 2 % |
| SO₃ | 0-0.5% |

13. A glass as claimed in claim 11, comprising (in percentage by weight):
| | |
|---|---|
| SiO₂ | 71-73.5 % |
| Al₂O₃ | 0-2 % |
| Na₂O | 10-12.2 % |
| K₂O | 0 - 2% |
| CaO | 10.6 - 12.6 % |
| MgO | 3.5 - 5.0 % |
| Fe₂O₃ | 0 - 2 % |
| SO₃ | 0 - 0.5 % |

14. A glass as claimed in any preceding claim, which has a light transmission of at least 85% measured on a sheet 4mm thick with Illuminant C, i.e. which constitutes a substantially clear glass.

15. A glass as claimed in any preceding claim, in the form of a sheet of glass.

16. A glass as claimed in claim 15, wherein the sheet of glass is thermally tempered.

17. A method of forming glass having a composition as claimed in any one of claims 1 to 14, the glass being formed as a ribbon on a float bath supplied by a canal operating at a temperature in the range 1100° - 1250°, preferably in the range 1150° - 1200°.

18. A method of forming glass as claimed in claim 17, wherein the glass has a viscosity (expressed as log₁₀ viscosity in poise) in the range 3.5 to 3.0 at the canal operating temperature.

## Patentansprüche

1. Natronkalk-Quarzglas, das durch das Floatverfahren gebildet werden kann, mit einer Zusammensetzung, die (in Gew.-%) enthält:
| | |
|---|---|
| SiO₂ | 68-75 % |
| Al₂O₃ | 0-4 % |
| Na₂O | 6-12,4 % |
| K₂O | 0-3 % |
| CaO | 10,2-17 % |
| MgO | 0-5,5 % |
| Fe₂O₃ | 0-2 % |
| SO₃ | 0-0,5 % |

2. Glas nach Anspruch 1, das 0,8-5,5 Gew.-% MgO enthält.

3. Glas nach Anspruch 1 oder Anspruch 2, das 9-12,2 Gew.-% Na₂O, 10,6-15 Gew.-% CaO und 1,0-5,0 Gew.-% MgO enthält.

4. Glas nach einem vorhergehenden Anspruch, wobei T log4 (d.h. die Temperatur, bei der log₁₀(Viskosität), ausgedrückt in Poise = 4) zwischen 1010 °C und 1050 °C liegt.

5. Glas nach einem vorhergehenden Anspruch, wobei T log3,5 zwischen 1100 °C und 1140 °C liegt.

6. Glas nach einem vorhergehenden Anspruch, wobei T log2,5 zwischen 1290 °C und 1350 °C liegt.

7. Glas nach einem vorhergehenden Anspruch mit einem Wärmeausdehnungskoeffizient im Bereich von 86-92 x 10⁻⁷/°C (50-350 °C).

8. Glas nach einem vorhergehenden Anspruch mit einem Brechungsindex N_{D} im Bereich von 1,50-1,54.

9. Glas nach einem vorhergehenden Anspruch mit einer Bruchzähigkeit von weniger als 0,72 MPa m^{½}, vorzugsweise weniger als 0,70 MPa m^{½}.

10. Glas nach einem vorhergehenden Anspruch mit einer Liquidustemperatur im Bereich von 1050-1200 °C, vorzugsweise 1070-1150°C.

11. Glas nach einem vorhergehenden Anspruch, das (in Gew.-%) enthält:
| | |
|---|---|
| SiO₂ | 70-73,5 % |
| Al₂O₃ | 0-3 % |
| Na₂O | 9-12,2% |
| K₂O | 0-2 % |
| CaO | 10,6-15 % |
| MgO | 1,0-5,0% |
| Fe₂O₃ | 0-2 % |
| SO₃ | 0-0,5 % |

12. Glas nach Anspruch 11, das (in Gew.-%) enthält:
| | |
|---|---|
| SiO₂ | 71-73 % |
| Al₂O₃ | 0-2 % |
| Na₂O | 11-12,2% |
| K₂O | 0-2 % |
| CaO | 12-14 % |
| MgO | 1,1-2,0 % |
| Fe₂O₃ | 0-2 % |
| SO₃ | 0-0,5 % |

13. Glas nach Anspruch 11, das (in Gew.-%) enthält:
| | |
|---|---|
| SiO₂ | 71-73,5 % |
| Al₂O₃ | 0-2 % |
| Na₂O | 10-12,2 % |
| K₂O | 0-2 % |
| CaO | 10,6-12,6 % |
| MgO | 3,5-5,0 % |
| Fe₂O₃ | 0-2 % |
| SO₃ | 0-0,5 % |

14. Glas nach einem vorhergehenden Anspruch, das eine an einer 4 mm dicken Platte mit Leuchtmittel C gemessene Licht-Durchlässigkeit von mindestens 85 % aufweist, d.h. das ein im wesentliches klares Glas darstellt.

15. Glas nach einem vorhergehenden Anspruch in Form einer Glasplatte.

16. Glas nach Anspruch 15, wobei die Glasplatte thermisch gehärtet ist.

17. Verfahren zum Bilden von Glas mit einer Zusammensetzung nach einem der Ansprüche 1 bis 14, wobei das Glas als Band auf einem Floatbad geformt wird, das über einen Kanal gespeist wird, der bei einer Temperatur im Bereich von 1100-1250°, vorzugsweise im Bereich von 1150-1200°, betrieben wird.

18. Verfahren zum Bilden von Glas nach Anspruch 17, wobei das Glas eine Viskosität (ausgedrückt als Log₁₀(Viskosität) in Poise) im Bereich von 3,5 bis 3,0 bei der Kanal-Betriebstemperatur aufweist.

## Revendications

1. Verre silicosodocalcique convenable pour la formation par le procédé de production de verre flotté, ayant une composition comprenant (en pourcentage en poids) :
| | |
|---|---|
| SiO₂ | 68-75 % |
| Al₂O₃ | 0-4 % |
| Na₂O | 6-12,4 % |
| K₂O | 0-3 % |
| CaO | 10,2-17 % |
| MgO | 0-5,5 % |
| Fe₂O₃ | 0-2 % |
| SO₃ | 0-0,5 % |

2. Verre suivant la revendication 1, contenant 0,8 à 5,5 % en poids de MgO.

3. Verre suivant la revendication 1 ou la revendication 2, contenant 9 à 12,2 % en poids de Na₂O, 10,6 à 15 % en poids de CaO et 1,0 à 5,0 % de MgO.

4. Verre suivant l'une quelconque des revendications précédentes, dans laquelle la valeur de T log 4 (c'est-à-dire la température à laquelle la valeur log₁₀ de viscosité exprimée en poises est égale à 4) est comprise dans l'intervalle de 1010°C à 1050°C.

5. Verre suivant l'une quelconque des revendications précédentes, dans lequel la valeur de T log 3,5 est comprise dans l'intervalle de 1100°C à 1140°C.

6. Verre suivant l'une quelconque des revendications précédentes, dans lequel la valeur de T log 2,5 est comprise dans l'intervalle de 1290°C à 1350°C.

7. Verre suivant l'une quelconque des revendications précédentes, ayant un coefficient de dilatation thermique compris dans l'intervalle de 86 - 92 x 10⁻⁷/°C (50°-350°C).

8. Verre suivant l'une quelconque des revendications précédentes, ayant un indice de réfraction N_{D} compris dans l'intervalle de 1,50 à 1,54.

9. Verre suivant l'une quelconque des revendications précédentes, ayant une ténacité à la rupture inférieure à 0,72 MPa m^{½}, de préférence inférieure à 0,70 MPa m^{½}.

10. Verre suivant l'une quelconque des revendications précédentes, ayant une température de liquidus comprise dans l'intervalle de 1050° à 1200°C, de préférence de 1070° à 1150°C.

11. Verre suivant l'une quelconque des revendications précédentes, comprenant (en pourcentage en poids) :
| | |
|---|---|
| SiO₂ | 70-73,5 % |
| Al₂O₃ | 0-3 % |
| Na₂O | 9-12,2 % |
| K₂O | 0-2 % |
| CaO | 10,6-15 % |
| MgO | 1,0-5,0 % |
| Fe₂O₃ | 0-2 % |
| SO₃ | 0-0,5 % |

12. Verre suivant la revendication 11, comprenant (en pourcentage en poids) :
| | |
|---|---|
| SiO₂ | 71-73 % |
| Al₂O₃ | 0 - 2 % |
| Na₂O | 11-12,2 % |
| K₂O | 0-2 % |
| CaO | 12-14% |
| MgO | 1,1-2,0 % |
| Fe₂O₃ | 0-2 % |
| SO₃ | 0-0,5 % |

13. Verre suivant la revendication 11, comprenant (en pourcentage en poids) :
| | |
|---|---|
| SiO₂ | 71-73,5 % |
| Al₂O₃ | 0-2 % |
| Na₂O | 10-12,2 % |
| K₂O | 0-2 % |
| CaO | 10,6-12,6 % |
| MgO | 3,5-5,0 % |
| Fe₂O₃ | 0-2 % |
| SO₃ | 0-0,5 % |

14. Verre suivant l'une quelconque des revendications précédentes, qui a une transmission de la lumière d'au moins 85 % mesurée sur une feuille de 4 mm d'épaisseur avec une source de lumière C, c'est-à-dire qui représente un verre substantiellement limpide.

15. Verre suivant l'une quelconque des revendications précédentes, sous la forme d'une feuille de verre.

16. Verre suivant la revendication 15, dans lequel la feuille de verre a subi une trempe thermique.

17. Procédé pour former un verre ayant une composition suivant l'une quelconque des revendications 1 à 14, le verre étant formé sous forme d'un ruban sur un bain de verre flotté alimenté par un canal fonctionnant à une température comprise dans l'intervalle de 1100° à 1250°C, de préférence dans l'intervalle de 1150° à 1200°C.

18. Procédé pour former un verre suivant la revendication 17, dans lequel le verre a une viscosité (exprimée par la valeur de log₁₀ viscosité en poises) comprise dans l'intervalle de 3,5 à 3,0 à la température de fonctionnement du canal.
